# EUROPEAN PATENT APPLICATION

(11) **EP 4 459 603 A1**
(43) Date of publication of application: **06.11.2024**
(21) Application number: 23747261.8
(22) Date of filing: 19.01.2023
(51) Int. Cl.: G09F 9/30, C03C 17/00, G06F 1/16

(54) **WINDOW GLASS AND ELECTRONIC DEVICE INCLUDING SAME**

(30) Priority: 27.01.2022 KR 20220012267; 06.05.2022 KR 20220056136
(71) Applicant: Samsung Electronics Co., Ltd, Suwon-si, Gyeonggi-do 16677 (KR)
(72) Inventor: BAE, Jaehyun, Suwon-si Gyeonggi-do 16677 (KR); SEO, Bobeom, Suwon-si Gyeonggi-do 16677 (KR); KANG, Dongkyeong, Suwon-si Gyeonggi-do 16677 (KR); CHOI, Hyunsuk, Suwon-si Gyeonggi-do 16677 (KR)
(74) Representative: Gulde & Partner
(86) International application number: PCT/KR2023/000964
(87) International publication number: WO 2023/146219

(57) **Abstract**

A flexible cover window according to various embodiments of the present disclosure may include: glass including a flat surface part and a folding part which extends from the flat surface part and has a thickness thinner than the flat surface part; and multiple coating layers positioned on the folding part, wherein each of the multiple coating layers includes a first portion having at least a part positioned on a first edge area of the folding part, and a second portion having at least a part positioned on a second edge area opposite to the first edge area of the folding part; and each of the first portion and the second portion includes a first coating layer formed with a first hardness, and a second coating layer which has at least a part in contact with the first portion and the second portion and is formed with a second hardness higher than the first hardness.

## Description

### [Technical Field]

Various embodiments disclosed herein relate to window glass and an electronic device including the same.

### [Background Art]

As the demand for mobile communication has increased and the degree of integration of electronic devices has increased, various techniques are being developed to improve the portability of electronic devices such as mobile communication terminals and to improve user convenience in using multimedia functions or the like. For example, research on foldable electronic devices with a foldable and unfoldable screen is being actively conducted.

An electronic device may include a display, and may be provided with window glass so as to protect the display from an external physical/chemical impact. The window glass may be laminated on one surface of the display and exposed outside the housing. Wires including pixels and thin film transistors are provided in the display, which may enable images or videos to be displayed outside the electronic device through the window glass. An adhesive member may be provided between the display and the window glass so that the display and the window glass can be bonded to each other. In a foldable electronic device, the window glass may be implemented as flexible glass that is foldable or unfoldable in the state of being bonded to the display.

### [Detailed Description of the Invention]

### [Technical Problem]

Flexible glass applied to a foldable electronic device should not leave folding marks even after repeated folding, should not deteriorate image quality, and should be highly durable to prevent from being damaged from a physical/chemical impact basically applied to the display. Increasing the thickness of flexible glass to increase rigidity may make folding difficult and make the flexible glass difficult to use in foldable electronic devices. A small thickness is required for folding performance, and a large thickness is required for strength performance. Thus, folding performance and strength performance are in a trade-off relationship. Accordingly, in recent years, flexible glass in which a folding portion has been locally processed to be thin and thus to be increased in flexibility is widely applied to foldable electronic devices.

When glass is folded, the maximum stress is generally formed at the edge, and folding damage causes cracks to form at the edge. Thus, there is a limit to making the folding section larger than the actual folding section. As the thin section increases, the area with weak impact resistance also increases. This causes scratches caused by fingernails and accessories such as earrings when using foldable devices, and especially causes market problems such as glass breaking or occurrence of display bright spots due to external impact.

Various embodiments of the disclosure are intended to provide an electronic device in which impact resistance performance for display protection in actual use such as use of a pen is maximized by reducing the portion with weak impact resistance in a thin folding portion of differential thickness window glass for foldable devices.

### [Technical Solution]

A flexible cover member according to various embodiments of the disclosure may include glass including a flat portion and a folding portion which extends from the flat portion and is thinner than the flat portion, and multiple coating layers located on the folding portion. The multiple coating layers may include a first coating layer including a first portion which is at least partially located on a first edge area of the folding portion, and a second portion which is at least partially located on a second edge area opposite to the first edge area of the folding portion, wherein each of the first portion and the second portion has a first hardness, and a second coating layer which is at least partially in contact with the first portion and the second portion and has a second hardness higher than the first hardness.

According to various embodiments of the disclosure, an electronic device may include a display assembly including a display module and a flexible cover window located on the display module. The flexible cover window may include glass including a flat portion and a folding portion which extends from the flat portion and is thinner than the flat portion, and multiple coating layers located on the folding portion. The multiple coating layers may include a first coating layer including a first portion located on an edge area of the folding portion, and a second portion located on a central area of the folding portion, wherein the first portion and the second portion has different lengths extending in a first direction perpendicular to the folding axis, and the first coating layer has a first hardness, and a second coating layer which is at least partially in contact with the first coating layer and has a second hardness higher than the first hardness.

### [Advantageous Effects]

According to various embodiments of the disclosure, impact resistance performance can be improved by disposing multiple coating layers on a thin folding portion of differential thickness window glass.

According to various embodiments of the disclosure, in differential thickness window glass, a relatively weak first coating layer is disposed in an edge area where a lot of stress is applied to a thin folding portion and a relatively strong second coating layer disposed in the central area. As a result, it is possible to relieve stress in the edge area during folding and to improve the impact resistance performance of the central area.

### [Brief Description of Drawings]

FIG. 1 is a block diagram of an electronic device in a network environment, according to various embodiments.
FIG. 2 is a view illustrating the unfolded state of an electronic device according to an embodiment of the disclosure.
FIG. 3 is a view illustrating the state in which the electronic device according to an embodiment of the disclosure is folded.
FIG. 4 is an exploded perspective view of the electronic device according to an embodiment of the disclosure.
FIG. 5 is a cross-sectional view of a flexible display and a flexible cover window according to various embodiments of the disclosure.
FIG. 6 is a perspective view illustrating glass and multiple coating layers according to an embodiment of the disclosure.
FIG. 7 is a cross-sectional view of the glass and the multiple coating layers of FIG. 6 according to an embodiment of the disclosure, taken along line A-A'.
FIG. 8 is a cross-sectional view of the glass and the multiple coating layers of FIG. 6 according to an embodiment of the disclosure taken along line A-A' when the glass and the multiple coating layers are in a bent state.
FIG. 9 is a perspective view illustrating glass and multiple coating layers according to an embodiment of the disclosure.
FIG. 10 is a perspective view illustrating glass and multiple coating layers according to another embodiment of the disclosure.
FIG. 11 is a cross-sectional view of the glass and the multiple coating layers of FIG. 9 according to an embodiment of the disclosure, taken along line B-B'.
FIG. 12 is a cross-sectional view of the glass and the multiple coating layers of FIG. 9 according to an embodiment of the disclosure taken along line B-B' when the glass and the multiple coating layers are in a bent state.
FIG. 13 is a perspective view illustrating glass and multiple coating layers according to another embodiment of the disclosure.

### [Mode for Carrying out the Invention]

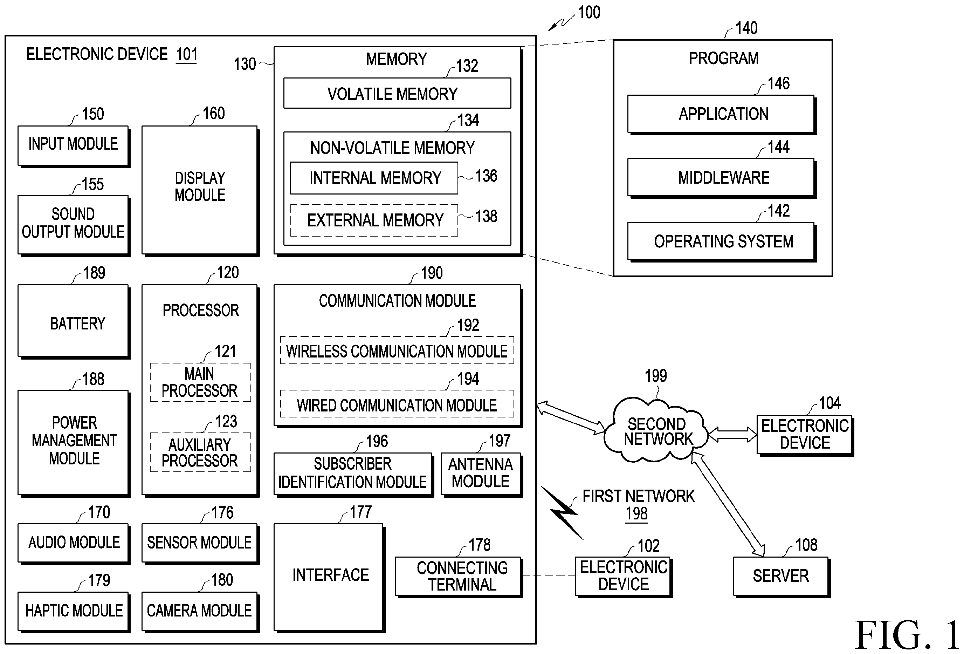

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

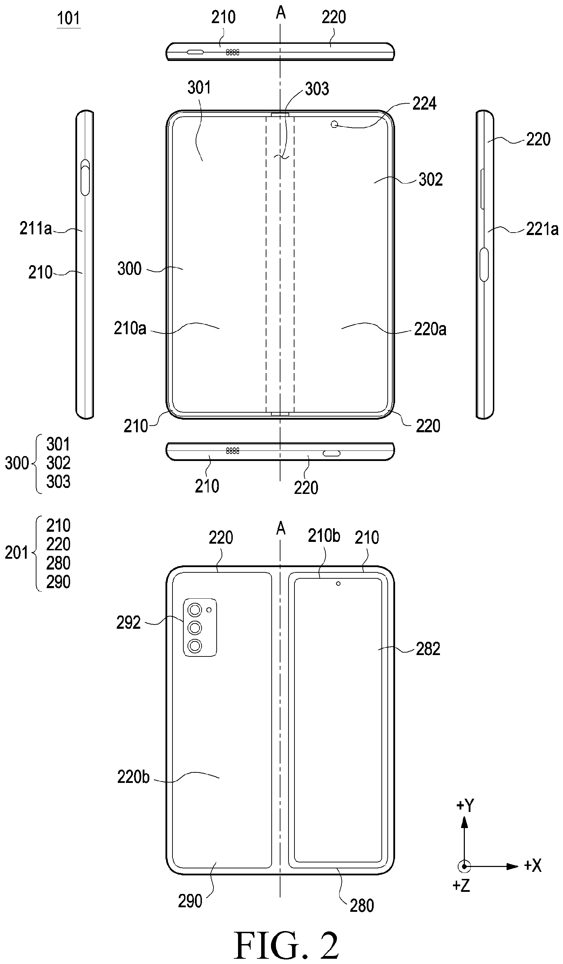

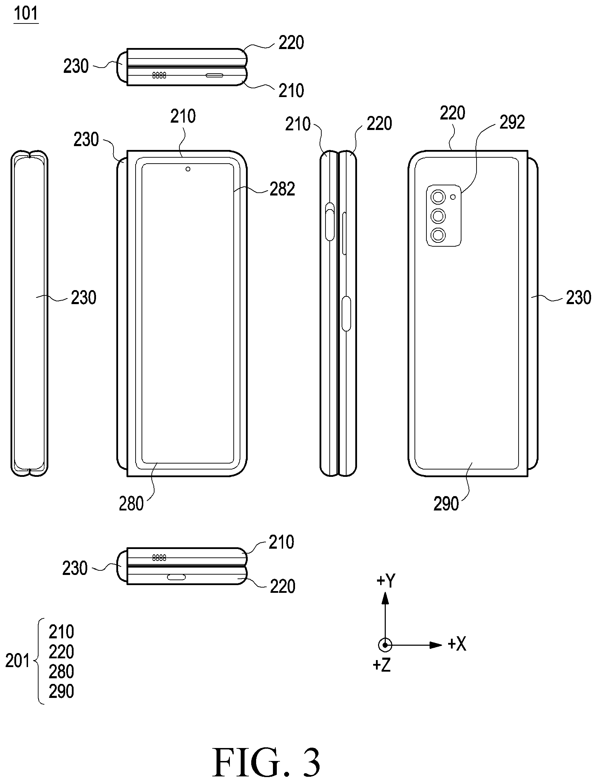

FIG. 2 is a view illustrating the unfolded state of an electronic device according to various embodiments of the disclosure. FIG. 3 is a view illustrating the state in which the electronic device according to various embodiments of the disclosure is folded.

Referring to FIGS. 2 and 3, in an embodiment, an electronic device 101 may include a foldable housing 201, a hinge cover 230 configured to cover the foldable portion of the foldable housing 201, and a flexible or foldable display 300 (hereinafter, simply referred to as a "display" 300) disposed in a space defined by the foldable housing 201. According to an embodiment, the surface on which the display 300 is disposed is defined as the front surface (e.g., a first surface 210a and a second surface 220a) of the electronic device 101. In addition, a surface opposite to the front surface is defined as the rear surface (e.g., a third surface 210b and a fourth surface 220b) of the electronic device 101. In addition, a surface surrounding the space between the front and rear surfaces is defined as the side surface (e.g., a first side surface 211a and a second side surface 221a) of the electronic device 101.

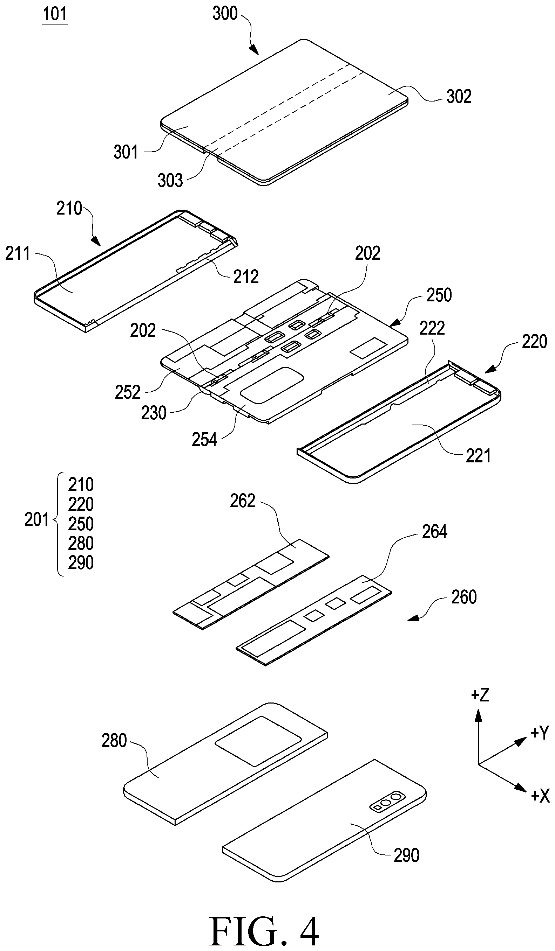

According to various embodiments, the foldable housing 201 may include a first housing 210, a second housing 220 including a sensor area 224, a first rear surface cover 280, a second rear surface cover 290, and a hinge structure (e.g., the hinge structure 202 in FIG. 4). The foldable housing 201 of the electronic device 101 is not limited to the shape and assembly illustrated in FIGS. 2 and 3, but may be implemented by a combination and/or an assembly of different shapes or components. For example, in another embodiment, the first housing 210 and the first rear surface cover 280 may be integrally configured, and the second housing 220 and the second rear surface cover 290 may be integrally configured. According to various embodiments, the first housing 210 may be connected to the hinge structure 202, and may include a first surface 210a oriented in a first direction and a third surface 210b oriented in a second direction opposite to the first direction. The second housing 220 is connected to the hinge structure 202 and includes a second surface 220a oriented in a third direction, and a fourth surface 220b oriented in a fourth direction opposite to the third direction, and the second housing 220 is rotatable with respect to the first housing 210 around the hinge structure 202. Accordingly, the electronic device 101 may be changed to a folded state or an unfolded state. When the electronic device 101 is in the folded state, the first surface 210a may face the second surface 220a, and when the electronic device 101 is in the unfolded state, the third direction may be the same as the first direction. According to an embodiment, when the electronic device 101 is in the unfolded state, the first and third directions may be the +Z direction, and the second and fourth directions may be the -Z direction. According to an embodiment, when the electronic device 101 is in the folded state, the first and fourth directions may be the +Z direction, and the second and third directions may be the -Z direction. Hereinbelow, unless otherwise stated, directions will be described with reference to the state in which the electronic device 101 is unfolded.

According to various embodiments, the first housing 210 and the second housing 220 may be disposed on opposite sides about the folding axis A, and may have generally symmetrical shapes with respect to the folding axis A. As will be described later, the angle or distance between the first housing 210 and the second housing 220 may vary depending on whether the electronic device 101 is in the unfolded state, in the folded state, or in the intermediate state. According to an embodiment, unlike the first housing 210, the second housing 220 may further include the sensor area 224 in which various sensors are disposed. However, the first housing 110 and the second housing 120 may have mutually symmetrical shapes in other areas. According to an embodiment, the folding axis A may include multiple (e.g., two) parallel folding axes. For example, the electronic device 101 may be a multi-foldable electronic device including three or more housings and including multiple folding axes.

According to various embodiments, the first housing 210 and the second housing 220 may define together a recess that accommodates the display 300.

According to various embodiments, the first housing 210 and the second housing 220 may be at least partially made of a metal or non-metal material having rigidity in a level selected in order to support the display 300. The at least a portion made of the metal material may provide a ground plane of the electronic device 101 and may be electrically connected to a ground line provided on a printed circuit board (e.g., the printed circuit board 260 in FIG. 4).

According to various embodiments, the sensor area 224 may be configured to have a predetermined area adjacent to a corner and/or an edge of the second housing 220. However, the arrangement, shape, and size of the sensor area 224 are not limited to the illustrated example. For example, in other embodiments, the sensor area 224 may be provided at another corner or at any area between the upper and lower end corners in the second housing 220 or in the first housing 210. In an embodiment, components embedded in the electronic device 101 to carry out various functions may be exposed on the front surface of the electronic device 101 through the sensor area 224 or through one or more openings provided in the sensor area 224. In various embodiments, the components may include various types of sensors. The sensors may include, for example, at least one of a front camera, a receiver, or a proximity sensor.

According to various embodiments, the first rear surface cover 280 may be disposed on the rear surface of the electronic device 101 on one side of the folding axis A and may have, for example, a substantially rectangular periphery, which may be surrounded by the first housing 210. Similarly, the second rear surface cover 290 may be arranged on the other side of the folding axis A of the rear surface of the electronic device 101, and the periphery of the second rear surface cover 290 may be enclosed by the second housing 220.

According to various embodiments, the first rear surface cover 280 and the second rear surface cover 290 may have substantially symmetrical shapes about the folding axis (the axis A). However, the first rear surface cover 280 and the second rear surface cover 290 do not necessarily have mutually symmetrical shapes, and in another embodiment, the electronic device 101 may include a first rear surface cover 280 and a second rear surface cover 290 having various shapes.

According to various embodiments, the first rear surface cover 280, the second rear surface cover 290, the first housing 210, and the second housing 220 may define a space in which various components (e.g., a printed circuit board or a battery) of the electronic device 101 may be disposed. According to an embodiment, one or more components may be disposed or visually exposed on the rear surface of the electronic device 101. For example, at least a portion of a sub-display (not illustrated) may be visually exposed through a first rear surface area 282 of the first rear surface cover 280. In another embodiment, one or more components or sensors may be visually exposed through a second rear surface area 292 of the second rear surface cover 290. In various embodiments, the sensors may include a proximity sensor and/or a rear camera.

According to various embodiments, a front camera, which is exposed on the front surface of the electronic device 101 through one or more openings provided in the sensor area 224, or a rear camera, which is exposed through the second rear surface area 292 of the second rear surface cover 290, may include one or more lenses, an image sensor, and/or an image signal processor. The flash (not illustrated) may include, for example, a light-emitting diode or a xenon lamp. In some embodiments, two or more lenses (e.g., an infrared camera, a wide-angle lens, and a telephoto lens), and image sensors may be arranged on one surface of the electronic device 101.

Referring to FIG. 3, the hinge cover 230 may be disposed between the first housing 210 and the second housing 220 and may be configured to cover internal components (e.g., the hinge structure 202 in FIG. 4). According to an embodiment, the hinge cover 230 may be covered by a portion of the first housing 210 and a portion of the second housing 220, or may be exposed to the outside depending on the state of the electronic device 101 (the unfolded state (flat stated) or the folded state).

According to an embodiment, as illustrated in FIG. 2, when the electronic device 101 is in the unfolded state, the hinge cover 230 may not be exposed by being covered by the first housing 210 and the second housing 220. As another example, as illustrated in FIG. 3, when the electronic device 101 is in the folded state (e.g., the fully folded state), the hinge cover 230 may be exposed to the outside between the first housing 210 and the second housing 220. As another example, when the first housing 210 and the second housing 220 are in the intermediate state in which the first and second housings are folded with a certain angle therebetween, the hinge cover 230 may be partially exposed to the outside between the first housing 210 and the second housing 220. However, in this case, the exposed area may be smaller than that in the fully folded state. In an embodiment, the hinge cover 230 may include a curved surface.

According to various embodiments, the display 300 may be disposed on a space defined by the foldable housing 201. For example, the display 300 may be seated in the recess defined by the foldable housing 201, and may constitute most of the front surface of the electronic device 101. Accordingly, the front surface of the electronic device 101 may include the display 300, and partial areas of the first housing 210 and the second housing 220, which are adjacent to the display 300. In addition, the rear surface of the electronic device 101 may include the first rear surface cover 280, a partial area of the first housing 210 adjacent to the first rear surface cover 280, the second rear surface cover 290, and a partial area of the second housing 220 adjacent to the second rear surface cover 290.

According to various embodiments, the display 300 may be a display at least a partial area of which is deformable into a flat surface or a curved surface. According to an embodiment, the display 300 may include a folding area 303, a first area 301 disposed on one side of the folding area 303 (e.g., the left side of the folding area 303 illustrated in FIG. 2), and a second area 302 disposed on the other side of the folding area 303 (e.g., the right side of the folding area 203 illustrated in FIG. 2).

However, the area division of the display 300 is illustrative, and the display 300 may be divided into multiple areas (e.g., four or more areas or two areas) depending on the structure or functions thereof. For example, in the embodiment illustrated in FIG. 2, the area of the display 300 may be divided by the folding area 303 or the folding axis (the axis A) extending parallel to the Y-axis. However, in another embodiment, the area of the display 300 may be divided based on another folding area (e.g., a folding area parallel to the X-axis) or another folding axis (e.g., a folding axis parallel to the X-axis). According to an embodiment, the display 300 may be coupled to or disposed adjacent to a touch-sensitive circuit, a pressure sensor that is capable of measuring touch intensity (pressure), and/or a digitizer (not illustrated) configured to detect a magnetic field-type stylus pen.

According to various embodiments, the first area 301 and the second area 302 may have generally symmetrical shapes about the folding area 303. However, unlike the first area 301, the second area 302 may include a notch or hole structure cut due to the presence of the sensor area 224, but may have a shape symmetric to that of the first area 301 in the other areas. In other words, the first area 301 and the second area 302 may include portions having mutually symmetrical shapes and portions having mutually asymmetrical shapes.

Hereinafter, the operations of the first housing 210 and the second housing 220 depending on the states of the electronic device 101 (e.g., a flat or unfolded state and a folded state) and respective areas of the display 300 will be described.

According to various embodiments, when the electronic device 101 is in the unfolded state (the flat state) (e.g., FIG. 2), the first housing 210 and the second housing 220 may be disposed to form an angle of 180 degrees therebetween and to be oriented in the same direction. The surface of the first area 301 and the surface of the second area 302 of the display 300 form 180 degrees relative to each other, and may be oriented in the same direction (e.g., the front direction of the electronic device). The folding area 303 may form the same plane as the first area 301 and the second area 302.

According to various embodiments, when the electronic device 101 is in the folded state (e.g., FIG. 3), the first housing 210 and the second housing 220 may be disposed to face each other. The surface of the first area 301 and the surface of the second area 302 of the display 300 form a narrow angle (e.g., between 0 degrees and 10 degrees) and may face each other. At least a portion of the folding area 303 may be provided as a curved surface having a predetermined curvature.

According to various embodiments, when the electronic device 101 is in the intermediate state (e.g., FIG. 4), the first housing 210 and the second housing 220 may be disposed to form a predetermined angle relative to each other. The surface of the first area 301 and the surface of the second area 302 of the display 300 may form an angle larger than that in the folded state and smaller than that in the unfolded state. At least a portion of the folding area 303 may form a curved surface having a predetermined curvature, and the curvature in this case may be smaller than that in the folded state.

FIG. 4 is an exploded perspective view illustrating the electronic device according to various embodiments of the disclosure.

Referring to FIG. 4, the electronic device 101 may include a foldable housing 201, a hinge structure 202, a board unit 260, and a display 300. The foldable housing 201 may include a first housing 210, a second housing 220, a bracket assembly 250, a first rear surface cover 280, and a second rear surface cover 290. The components of the foldable housing 201 and the display 300 of FIG. 4 may be partly or wholly the same as the components of the foldable housing 201 and the display 300 of FIG. 2.

According to various embodiments, the bracket assembly 250 may include a first mid plate 252 and a second mid plate 254. The hinge structure 202 may be disposed between the first mid plate 252 and the second mid plate 254. When the hinge structure 202 is viewed from the outside, the hinge structure 202 may be covered by a hinge cover (e.g., the hinge cover 230 in FIG. 4). According to an embodiment, a printed circuit board (e.g., a flexible printed circuit board (FPCB)) may be disposed on the bracket assembly 250 across the first mid plate 252 and the second mid plate 254.

According to various embodiments, the board unit 260 may include a first circuit board 262 disposed on the first mid plate 252 and a second circuit board 264 disposed on the second mid plate 254. The first circuit board 262 and the second circuit board 264 may be disposed in a space defined by the bracket assembly 250, the first housing 210, the second housing 220, the first rear surface cover 280, and the second rear surface cover 290. Components for implementing various functions of the electronic device 101 may be mounted on the first circuit board 262 and the second circuit board 264.

According to various embodiments, the first housing 210 and the second housing 220 may be assembled to be coupled to the opposite sides of the bracket assembly 250 in the state in which the display 300 is coupled to the bracket assembly 250. According to an embodiment, the first housing 210 may include a first side surface member 211 surrounding at least a portion of the side surface of the first mid plate 252, and the second housing 220 may have a structure including a second side surface member 221 surrounding at least a portion of the side surface of the second mid plate 254. The first housing 210 may include a first rotation support surface 212, and the second housing 220 may include a second rotation support surface 222, which corresponds to the first rotation support surface 212. The first rotation support surface 212 and the second rotation support surface 222 may include curved surfaces corresponding, respectively, to curved surfaces included in the hinge cover 230. According to an embodiment, the first side surface member 211 may include a first side surface (e.g., the first side surface 211a in FIG. 1) which surrounds at least a portion of the surface between the first surface 210a and the third surface 210b and is perpendicular to the first direction or the second direction. According to an embodiment, the second side surface member 221 may include a second side surface (e.g., the second side surface 221a in FIG. 2) which surrounds at least a portion of the space between the second surface 220a and the fourth surface 220b and is perpendicular to the third direction or the fourth direction.

According to an embodiment, when the electronic device 101 is in the unfolded state (e.g., the electronic device in FIG. 2), the first rotation support surface 212 and the second rotation support surface 222 may cover the hinge cover 230, and the hinge cover 230 may not be exposed to the rear surface of the electronic device 101 or may be exposed to a minimum. As another example, when the electronic device 101 is in the folded state (e.g., the electronic device in FIG. 3), the first rotation support surface 212 and the second rotation support surface 222 may rotate along the curved surface included in the hinge cover 230 so that the hinge cover 230 can be maximally exposed to the rear surface of the electronic device 101.

According to various embodiments, the electronic device 101 may be implemented in various form factors. For example, when the electronic device 101 is implemented as a foldable phone (e.g., FIGS. 2 to 4), the electronic device 101 may be implemented as an in-folding type foldable phone, an out-folding type foldable phone (not illustrated), or a multi-folding type foldable phone (not illustrated). The out-folding type foldable phone is a foldable phone in which, when the electronic device is folded, the portions of the folded display are located on the outer surfaces of the electronic device that are oriented in different directions, respectively, and the multi-folding type foldable phone is a foldable phone in which the electronic device is folded twice or more, and may be a foldable phone including at least one of an in-folding type or an out-folding type. According to an embodiment, when the electronic device 101 is implemented as a rollable phone, the electronic device 101 may be implemented as a sliding-type rollable phone (not illustrated) or a rolling-type rollable phone.

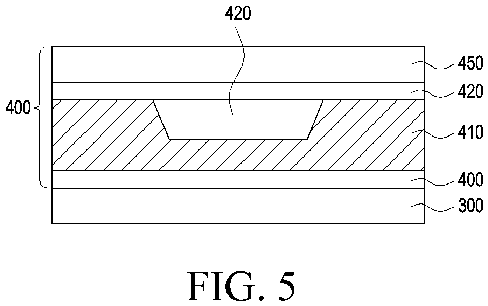

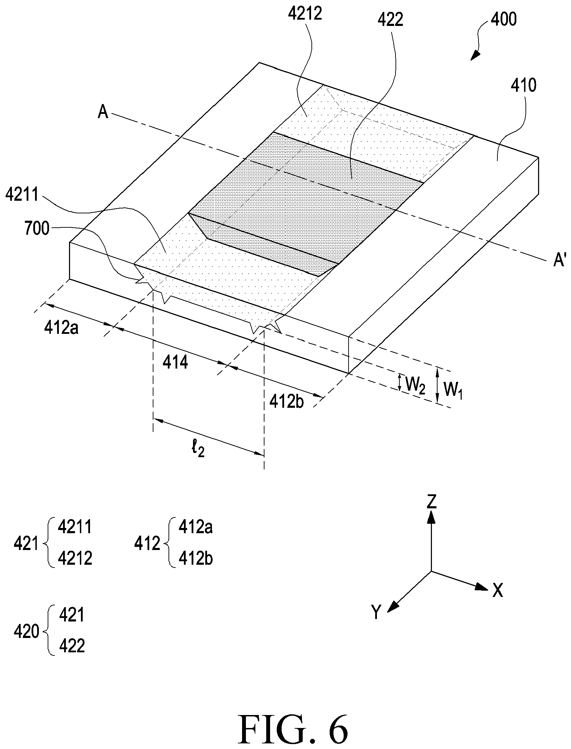

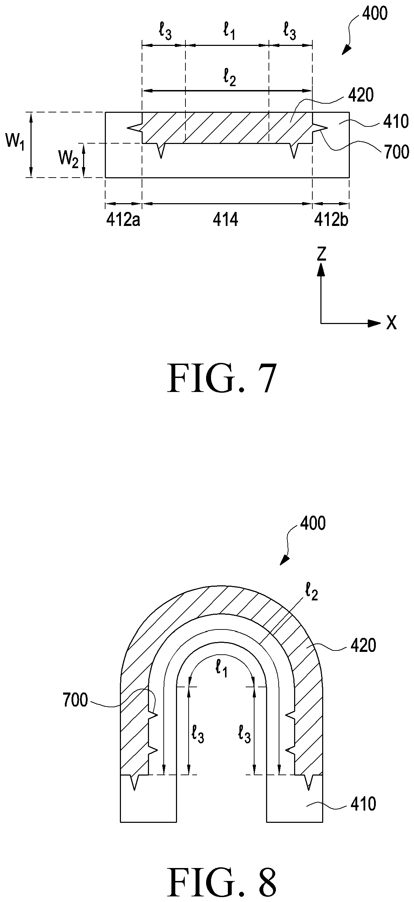

FIG. 5 is a cross-sectional view of a flexible display and a flexible cover window according to various embodiments of the disclosure. FIG. 6 is a perspective view illustrating a glass 410 and multiple coating layers 420 according to an embodiment of the disclosure. FIG. 7 is a cross-sectional view of the glass 410 and the multiple coating layers 420 of FIG. 6 according to an embodiment of the disclosure, taken along line A-A'. FIG. 8 is a cross-sectional view of the glass 410 and the multiple coating layers 420 of FIG. 6 according to an embodiment of the disclosure taken along line A-A' when the glass 410 and the multiple coating layers 420 are in a bent state.

Referring to FIGS. 5 to 8, an electronic device 101 may include a display module 300 and a flexible cover window 400. According to various embodiments, the flexible cover window 400 may include glass 410, multiple coating layers 420 located on the glass 410, a protection layer 430 located on the glass 410 and the multiple coating layers 420, and an impact absorbing layer 440 located under the glass 410 to protect the display module 300.

All or some of the components of the electronic device 101 of FIGS. 5 to 8 may be the same as those of the electronic device 101 of FIG. 2, and all or some of the components of the display module 300 of FIGS. 5 to 8 may be the same as those of the display 300 of FIG. 2.

Referring to FIGS. 5 to 8, "X" may refer to the width direction of the electronic device 101. "Y" may refer to the length direction of the electronic device 101. "Z" may refer to the thickness direction of the electronic device 101. In addition, in an embodiment of the disclosure, "+X" may refer to the right direction of the electronic device 101 with respect to the folding axis A of the electronic device 101, and "-X" may refer to the left direction of the electronic device 101 with respect to the folding axis A of the electronic device 101. In an embodiment of the disclosure, "+Y" may refer to the upper direction of the electronic device 101, and "-Y" may refer to the lower direction of the electronic device 101. In an embodiment of the disclosure, "+Z" may refer to the front direction of the electronic device 101, and "-Z" may refer to the rear direction of the electronic device 101.

According to various embodiments, the flexible cover window 400 may be disposed on the display module 300. According to an embodiment, the flexible cover window 400 may form at least a portion of the outer surface of the electronic device 101. For example, the flexible cover window 400 may provide at least a portion of the front surface (e.g., the first surface 210a and the second surface 220a in FIG. 2) of the electronic device 101. According to an embodiment, the flexible cover window 400 may cover at least a portion of the display module 300 and protect the display module 300 from an external impact. According to an embodiment, the display module 300 may be visually exposed to the outside of the electronic device 101 through the flexible cover window 400. According to an embodiment, the display module 300 may include the flexible cover window 400.

According to various embodiments, the glass 410 may be made of a substantially transparent and flexible material. For example, at least a portion of the glass 410 may include glass with a bendable thickness (e.g., flexible thin glass (FTG)).

According to various embodiments, the glass 410 may include multiple areas having different lengths in thickness and/or width. For example, the glass 410 may include at least one flat portion 412 and at least one folding portion 414 extending from the flat portion 412. The flat portion 412 is an area of the glass 410 in which the thickness and/or the width is substantially uniform, and the folding portion 414 is another area of the glass 410 which is different from the flat portion 412 in thickness and/or width. According to an embodiment, when the electronic device 101 is folded or rolled, the glass 410 may be bent about the bending area 414.

According to various embodiments, when at least a portion of the electronic device 101 is folded or slid, the flat portion 412 may not be bent. According to an embodiment, the flat portion 412 may face the foldable housing (e.g., the foldable housing 201 in FIG. 2). For example, a first flat portion 412a may face the first housing (e.g., the first housing 210 in FIG. 1), and a second flat portion 412b may face the second housing (e.g., the second housing 220 in FIG. 2).

According to various embodiments, when the electronic device 101 is folded or slid, the folding portion 414 may be bent. According to an embodiment, at least a portion of the folding portion 414 may face at least a portion of a hinge structure (e.g., the hinge structure 202 in FIG. 4).

According to various embodiments, the flat portion 412 may include multiple flat portions 412a and 412b. According to an embodiment, the flat portion 412 may include a first flat portion 412a and a second flat portion 412b spaced apart from the first flat portion 412a. The folding portion 414 may be located between the multiple flat portions 412. The first flat portion 412a and the second flat portion 412b may be arranged side by side. For example, the first flat portion 412a and the second flat portion 412b may be symmetrical with respect to the folding portion 414.

According to various embodiments, the flat portion 412 and the folding portion 414 of the glass 410 may have different thicknesses. The flat portion 412 may have a first thickness (wi). The folding portion 414 may have a second thickness w₂ smaller than the first thickness wi. For example, the first thickness wi may be 30 µm or more in order to ensure constant strength, and the second thickness w₂ may be 30 µm or less which is smaller than the first thickness wi in order to ensure folding performance.

According to various embodiments, the length l₂ of the folding portion 414 of the glass 410 in the width direction (the x-axis direction) may be larger than the length of the section l₁ where actual bending occurs (hereinafter, referred to as a "bending section") to relieve the stress applied during folding (l₂ > l₁). Since the length of the folding portion 414, which is thinner than the flat portion 412, is larger than the length of the bending section l₁, the area with weak impact resistance may increase. Accordingly, rigidity may be secured and/or supplemented by disposing multiple coating layers 420 on the folding portion 414. Hereinafter, the multiple coating layers 420 located on the folding portion 414 will be reviewed.

According to various embodiments, the multiple coating layers 420 may include a first coating layer 421 with a first hardness, and a second coating layer 422 with a second hardness higher than the first hardness. For example, the first hardness may be greater than 0 kpa and 20 kpa or less. For example, the second hardness may be 20 kpa or more and 30 kpa or less.

According to various embodiments, the first coating layer 421 may include a first portion 4211 located on a first edge area (an area close to the upper direction (the +Y axis direction)) of the folding portion 414 of the glass 410, and a second portion 4212 located on a second edge area (an area close to the lower direction (the -Y axis direction)) opposite to the first edge area.

According to various embodiments, the second coating layer 422 may be located on a central area between the first edge area and the second edge area of the folding portion 414 of the glass 410. The second coating layer 422 may be in contact with the first portion 4211 and the second portion 4212. For example, the second coating layer 422 may be located between the first portion 4211 and the second portion 4212.

Since the stress in the edge area is strongest during folding, it is possible to alleviate the bending stress by placing the first coating layer 421 with a relatively low first hardness on the first edge area and/or the second edge area. It is possible to increase the strength of the folding portion 414 with lower strength than the flat portion 412 by disposing the second coating layer 422 with a relatively high second hardness on the central area.

According to various embodiments, multiple slips 700 may be provided in at least a portion of the glass 410 that is in contact with the multiple coating layers 420. When bending the electronic device, since the bending degrees of the multiple coating layers 420 and the glass 410 are different from each other, peeling may occur between the multiple coating layers 420 and the glass 410. In order to prevent such peeling, at least a portion of the glass 410 may further include multiple slips 700 in order to suppress the sliding or lifting of the multiple coating layers 420 during bending, and improve the adhesion between the multiple coating layers 420 and the glass 410. By further including the multiple slips 700, the surface area, which is in contact between the multiple coating layers 420 and the glass 410, is increased and the friction force is increased so that peeling between the multiple coating layers 420 and the glass 410 can be prevented. The multiple slips 700 may be provided in areas that are not bent. This is because when the multiple slips 700 are provided in the bending section, the glass 410 may be damaged. The multiple slips 700 may be provided in the flat portion 412. For example, the multiple slips 700 may be provided on one surface of the flat portion 412 that is in contact with the multiple coating layers 420. The multiple slips 700 may be provided in a section l₃ of the folding portion 414, other than the actual bending section l₁.

According to various embodiments, the size of the multiple slips 700 may be small enough not to affect damage to the glass. For example, the size of the multiple slips 700 may be approximately 1 µm or less. According to various embodiments, the size of the multiple slips 700 may vary depending on the strength of the multiple coating layers 420 in contact with the glass 410. For example, the size of the multiple slips 700 in contact with the first coating layer 421 with a first hardness may be larger than the size of the multiple slips 700 in contact with the second coating layer 422 with a relatively higher second hardness.

However, the composite coating structure may be implemented not only in the form of differential thickness glass 410 and multiple coating layers 420, but also in the form of flat glass and differential strength coating layers.

According to various embodiments, the flexible cover window 400 may further include a refractive index matching resin layer 450 to supplement the visibility of the interface between the glass 410 and the multiple coating layers 420. The refractive index matching resin layer 450 may be located on the protection layer 430.

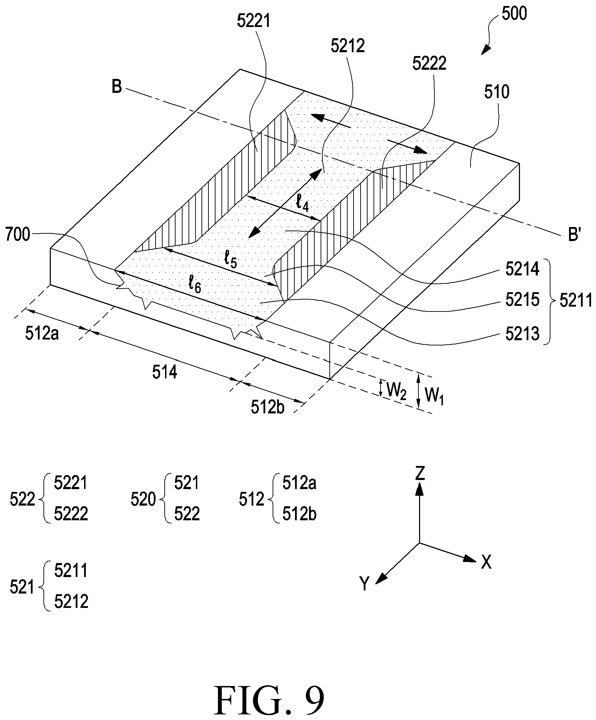

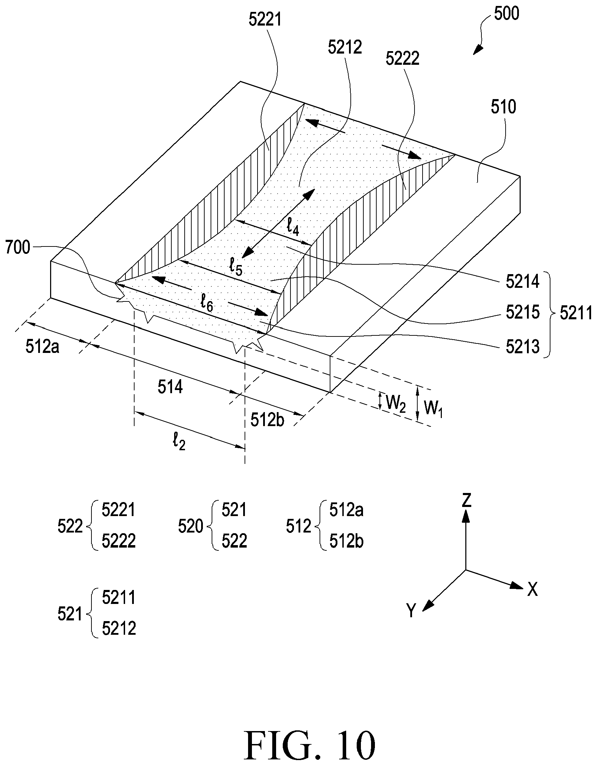

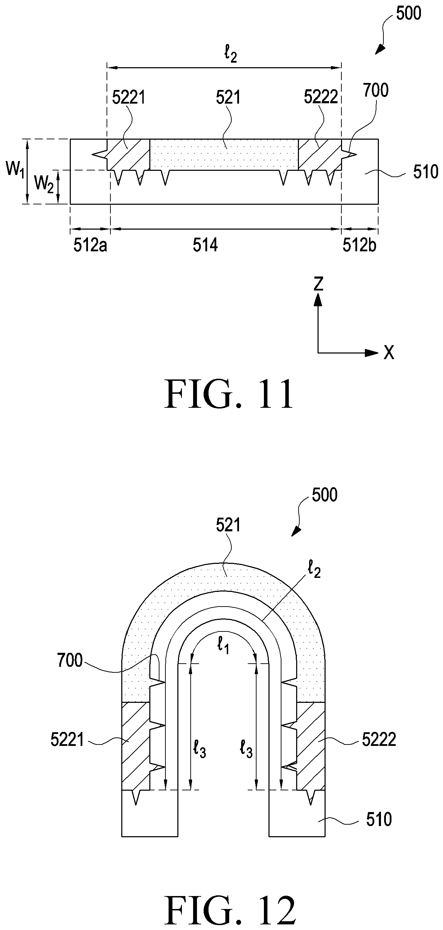

FIG. 9 is a perspective view illustrating glass 510 and multiple coating layers 520 according to an embodiment of the disclosure. FIG. 10 is a perspective view illustrating glass 510 and multiple coating layers 520 according to another embodiment of the disclosure. FIG. 11 is a cross-sectional view of the glass 510 and the multiple coating layers 520 of FIG. 9 according to an embodiment of the disclosure, taken along line B-B'. FIG. 12 is a cross-sectional view of the glass 510 and the multiple coating layers 520 of FIG. 9 according to an embodiment of the disclosure taken along line B-B' when the glass 510 and the multiple coating layers 520 are in a bent state.

Referring to FIGS. 9 to 12, an electronic device 101 may include a display module 300 and a flexible cover window 500. According to various embodiments, the flexible cover window 500 may include glass 510, multiple coating layers 520 located on the glass 510, a protection layer 530 located on the glass 510 and the multiple coating layers 520, and an impact absorbing layer 540 located under the glass 510.

All or some of the components of the electronic device 101 of FIGS. 9 to 12 may be the same as those of the electronic device 101 of FIG. 2, and all or some of the components of the display module 300 of FIGS. 9 to 12 may be the same as those of the display 300 of FIG. 2. All or some of the components of the flexible cover window 500 of FIGS. 9 to 12 may be the same as those of the flexible cover window 400 of FIGS. 5 to 8.

Referring to FIGS. 9 to 12, "X" may refer to the width direction of the electronic device 101. "Y" may refer to the length direction of the electronic device 101. "Z" may refer to the thickness direction of the electronic device 101. In addition, in an embodiment of the disclosure, "+X" may refer to the right direction of the electronic device 101 with respect to the folding axis A of the electronic device 101, and "-X" may refer to the left direction of the electronic device 101 with respect to the folding axis A of the electronic device 101. In an embodiment of the disclosure, "+Y" may refer to the upper direction of the electronic device 101, and "-Y" may refer to the lower direction of the electronic device 101. In an embodiment of the disclosure, "+Z" may refer to the front direction of the electronic device 101, and "-Z" may refer to the rear direction of the electronic device 101.

According to an embodiment, the multiple coating layers 520 may include a first coating layer 521 with a first hardness, and a second coating layer 522 with a second hardness higher than the first hardness. For example, the first hardness may be greater than 0 kpa and 30 kpa or less. For example, the second hardness may be 30 kpa or more and 30 kpa or less.

According to an embodiment, the first coating layer 521 may include a first portion 5211 located on a first edge area (an area close to the upper direction (the +Y axis direction)) of the folding portion 515 of the glass 510, and a second portion 5212 located on a second edge area (an area close to the rear direction (the -Y axis direction)) opposite to the first edge area. For example, the first portion 5211 and the second portion 5212 may be configured symmetrically with respect to the X-axis central area. For example, the first portion 5211 and the second portion 5212 may be configured integrally.

According to an embodiment, the second coating layer 522 may be in contact with the first portion 5211 and the second portion 5212. The second coating layer 522 may be a portion of the folding portion 514 excluding the first portion 5211 and the second portion 5212. The second coating layer 522 may be located between the first layer 521 and the flat portion 512. The second coating layer 522 may include a third portion 5221 located between the first coating layer 521 and the first flat portion 512a, and a fourth portion 5222 located between the first coating layer 521 and the second flat portion 512b.

According to an embodiment, each of the first portion 5211 or the second portion 5212 of the first coating layer 521 may include multiple areas extending in the width direction (the X-axis direction) with different lengths. The multiple areas may include a first area 5213, at least a portion of which is located in the first edge area (an area close to the upper direction (the +Y direction)) or the second edge area (an area close to the lower direction (the -Y axis direction), a second area 5214 located in the central area between the first edge area and the second edge area, and a third area 5215 located between the first area and the second area. The first area may have a first length l₆ in the width direction (the X-axis direction), the second area may have a second length l₄ in the width direction (the X-axis direction), and the third area may have a third length l₅ in the width direction. At this time, the first length l₆ may be larger than the third length l₅, and the third length l₅ may be larger than the second length l₄. That is, the lengths in the length direction may become longer toward the edge area. The first length l₆ may be equal to the length l₂ of the folding portion 414. The second length l₄ may be the minimum length in the length direction (the X-axis direction). For example, the second length l₄, which is the minimum length, may be equal to or larger than the length l₁ of the bending section.

According to an embodiment, the first coating layer 521 may be applied in both directions. In the case of the first area located in the edge area of the first coating layer 521, a coating may be applied in the X-axis direction to prevent stress. In the case of the second area located in the central area of the first coating layer 521, a coating may be applied in the Y-axis direction.

According to an embodiment, since the stress in the edge area is strongest during folding, it is possible to alleviate the bending stress by placing the first coating layer 421 with the first hardness on the first edge area and/or the second edge area. It is possible to increase the strength of the folding portion 414 with lower strength than the flat portion 412 by disposing the second coating layer 522 with the second hardness in the central area.

According to an embodiment, at least a portion of the boundary line between the first coating layer 521 and the second coating layer 522 may be curved. For example, the boundary line may have a shape in which straight and curved lines are combined. According to another embodiment, referring to FIG. 10, the boundary line between the first coating layer 521 and the second coating layer 522 may be curved. When the boundary line between the first coating layer 521 and the second coating layer 522 includes a curved line, it may be advantageous in terms of stress concentration.

According to various embodiments, multiple slips 700 may be provided in at least a portion of the glass 510 that is in contact with the multiple coating layers 520. When bending the electronic device, since the bending degrees of the multiple coating layers 520 and the glass 510 are different from each other, peeling may occur between the multiple coating layers 520 and the glass 510. In order to prevent such peeling, at least a portion of the glass 510 may further include multiple slips 700 in order to suppress the sliding or lifting of the multiple coating layers 520 during bending, and improve the adhesion between the multiple coating layers 520 and the glass 510. By further including the multiple slips 700, the surface area, which is in contact between the multiple coating layers 520 and the glass 510, is increased and the friction force is increased so that peeling between the multiple coating layers 520 and the glass 510 can be prevented. The multiple slips 700 may be provided in areas that are not bent. This is because when the multiple slips 700 are provided in the section where actual bending occurs, the glass 510 may be damaged. The multiple slips 700 may be provided in the flat portion 512. For example, the multiple slips 700 may be provided on one surface of the flat portion 512 that is in contact with the multiple coating layers 520. The multiple slips 700 may be provided in a section l₃ of the folding portion 515, other than the actual bending section l₁.

According to various embodiments, the size of the multiple slips 700 may be small enough not to affect damage to the glass. For example, the size of the multiple slips 700 may be approximately 1 µm or less. According to various embodiments, the size of the multiple slips 700 may vary depending on the strength of the multiple coating layers 520 in contact with the glass 510. For example, the size of the multiple slips 700 in contact with the first coating layer 521 with a first hardness may be larger than the size of the multiple slips 700 in contact with the second coating layer 522 with a relatively higher second hardness.

However, the composite coating structure may be implemented not only in the form of differential thickness glass 510 and multiple coating layers 520, but also in the form of flat glass and differential strength coating layers.

According to various embodiments, the flexible cover window 500 may further include a refractive index matching resin layer 550 to supplement the visibility of the interface between the glass 510 and the multiple coating layers 520. The refractive index matching resin layer 550 may be located on the protection layer 530.

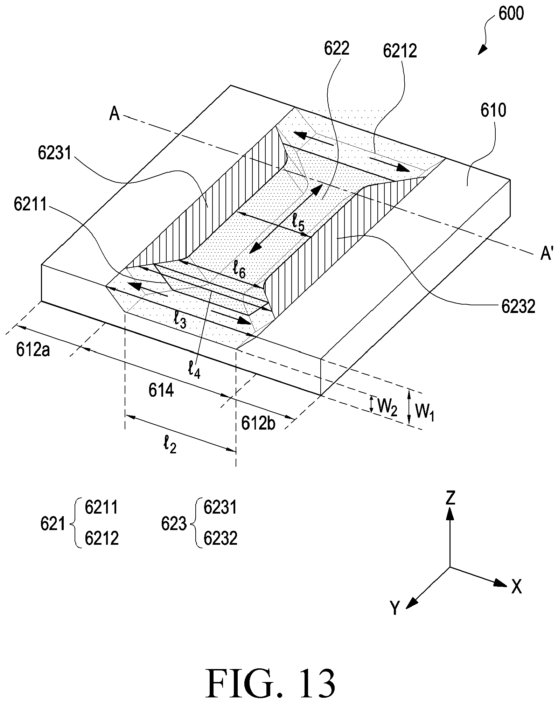

FIG. 13 is a perspective view illustrating glass 610 and multiple coating layers 620 according to another embodiment of the disclosure.

Referring to FIG. 13, an electronic device 101 may include a display module 300 and a flexible cover window 600. According to various embodiments, the flexible cover window 600 may include glass 610, multiple coating layers 620 located on the glass 610, a protection layer 630 located on the glass 610 and the multiple coating layers 620, and an impact absorbing layer 640 located under the glass 610.

All or some of the components of the electronic device 101 of FIG. 13 may be the same as those of the electronic device 101 of FIG. 2, and all or some of the components of the display module 300 of FIG. 13 may be the same as those of the display 300 of FIG. 2. All or some of the components of the flexible cover window 600 of FIG. 13 may be the same as those of the flexible cover window 500 of FIGS. 9 to 12.

Referring to FIG. 13, "X" may refer to the width direction of the electronic device 101. "Y" may refer to the length direction of the electronic device 101. "Z" may refer to the thickness direction of the electronic device 101. In addition, in an embodiment of the disclosure, "+X" may refer to the right direction of the electronic device 101 with respect to the folding axis A of the electronic device 101, and "-X" may refer to the left direction of the electronic device 101 with respect to the folding axis A of the electronic device 101. In an embodiment of the disclosure, "+Y" may refer to the upper direction of the electronic device 101, and "-Y" may refer to the lower direction of the electronic device 101. In an embodiment of the disclosure, "+Z" may refer to the front direction of the electronic device 101, and "-Z" may refer to the rear direction of the electronic device 101.

According to an embodiment, the multiple coating layers 620 may include a first coating layer 621 with a first hardness, a second coating layer 622 with a second hardness higher than the first hardness, and a third coating layer 623 with a third hardness higher than the second hardness. For example, the first hardness may be greater than 0 kpa and 20 kpa or less. For example, the second hardness may be 20 kpa or more and 30 kpa or less. For example, the third hardness may be 30 kpa or more and 50 kpa or less.

According to an embodiment, the first coating layer 621 may include a first portion 6211 located on a first edge area (an area close to the upper direction (the +Y axis direction)) of the folding portion 614 of the glass 610, and a second portion 6212 located on a second edge area (an area close to the lower direction (the -Y axis direction)) opposite to the first edge area. For example, the first portion 6211 and the second portion 6212 may be configured symmetrically with respect to the X-axis central area.

According to an embodiment, the second coating layer 622 may be located on a central area between the first edge area and the second edge area of the folding portion 614 of the glass. The second coating layer 622 may be in contact with the first portion 6211 and the second portion 6212. For example, the second coating layer 622 may be located between the first portion 6211 and the second portion 6212.

According to an embodiment, the third coating layer 623 may be in contact with the first coating layer 621 and the second coating layer 622. The third coating layer 623 may be a portion excluding the first coating layer 621 and the second coating layer 622. The third coating layer 623 may be located between the first layer 621, the second layer 622, and the flat portion 612. The third coating layer 623 may include a third portion 6231 located between the first coating layer 621, the second coating layer 622, and the first flat portion 612a, and a fourth portion 6232 located between the first coating layer 521, the second coating layer 622, and the second flat portion 612b.

According to an embodiment, the first coating layer 621 and the second coating layer 622 may include multiple areas extending in the width direction (the X-axis direction) with different lengths. The first coating layer 621 may include a first area which is at least partially located in the first edge area (the area close to the upper direction (the +Y axis direction)) and/or the second edge area (the area close to the lower direction (the -Y axis direction)), and a second area which is at least partially in contact with the second coating layer 622. The second coating layer 622 may include a third area which is at least partially located in the central area and a fourth area which is at least partially in contact with the first coating layer 621.

The first area may have a first length l₃ in the width direction (the X-axis direction), the second area may have a second length l₄ in the width direction (the X-axis direction), the third area may have a third length l₅ in the width direction, and the fourth area may have a fourth length l₆ in the width direction (the X-axis direction). At this time, the first length l₃ may be larger than the second length l₄. The third length l₅ may be smaller than the fourth length l₆. That is, the lengths in the width direction may become longer toward the edge area. The first length l₃ may be equal to the length l₂ of the folding portion 414. The third length l₅ may be the minimum length in the width direction (the X-axis direction). For example, the third length l₅, which is the minimum length, may be equal to or larger than the length l₁ of the bending section.

According to an embodiment, the first coating layer 621 and the second coating layer 622 may be applied in different directions. For example, the first coating layer 621 may be applied in the X-axis direction to prevent stress. For example, the second coating layer 622 may be applied in the Y-axis direction.

According to an embodiment, since the stress in the edge area is strongest during folding, it is possible to alleviate the bending stress by placing the first coating layer 421 with the relatively low first hardness on the first edge area and/or the second edge area. It is possible to increase the strength of the folding portion 414 with lower strength than the flat portion 412 by disposing the second coating layer 622 with the second hardness in the central area. In addition, it is possible to increase the strength of the folding portion 614 with lower strength than the flat portion 612 by disposing at least a portion of the third coating layer 623 with the relatively high third hardness in the central area.

According to an embodiment, at least a portion of the boundary line between the first coating layer 621 and the second coating layer 622 may be curved. For example, the boundary line may have a shape in which straight and curved lines are combined. When the boundary line between the first coating layer 621 and the second coating layer 622 is curved, it may be advantageous in terms of stress concentration.

A flexible cover member according to various embodiments of the disclosure may include glass including a flat portion and a folding portion which extends from the flat portion and is thinner than the flat portion, and multiple coating layers located on the folding portion. The multiple coating layers may include a first coating layer including a first portion which is at least partially located on a first edge area of the folding portion, and a second portion which is at least partially located on a second edge area opposite to the first edge area of the folding portion, wherein each of the first portion and the second portion has a first hardness, and a second coating layer which is at least partially in contact with the first portion and the second portion and has a second hardness higher than the first hardness.

According to various embodiments, the first portion and the second portion of the first coating layer may be configured integrally.

According to various embodiments, the first portion of the first coating layer may include multiple areas with different lengths extending in a first direction perpendicular to a folding axis, and the multiple areas may include a first area at least partially located on the first edge area, a second area located between the first edge area and the second edge area, and a third area located between the first area and the second area.

According to various embodiments, the length of the first coating layer extending in the first direction may be larger in the first area than in the second area.

According to various embodiments, the first area of the first coating layer may be coated in the first direction, and the second area may be coated in a second direction perpendicular to the first direction.

According to various embodiments, the minimum length of the first coating layer may be equal to the length of a bending section when the electronic device is folded.

According to various embodiments, the second coating layer may be located between the first coating layer and the flat portion.

According to various embodiments, a boundary line between the second coating layer and the first coating layer may be at least partially curved.

According to various embodiments, the second coating layer may be located between the first portion and the second portion.

According to various embodiments, multiple slips may be provided on the glass which is in contact with the first coating layer and the second coating layer.

According to various embodiments, the multiple slips may be provided in the flat portion of the glass.

According to various embodiments, the multiple slips may be provided in at least a portion of the folding portion of the glass, excluding the bending section.

According to various embodiments, the multiple slips in contact with the first coating layer having the first hardness may have a size larger than that of the multiple slips in contact with the second coating layer having the second hardness.

According to various embodiments, the first coating layer may further include a third portion provided between the first portion and the second portion and having a third hardness that is higher than the first hardness and lower than the second hardness.

According to various embodiments, the length of the folding portion may be larger than that of the bending section.

An electronic device according to various embodiments of the disclosure may include a display assembly including a display module and a flexible cover window located on the display module. The flexible cover window may include glass including a flat portion and a folding portion which extends from the flat portion and is thinner than the flat portion, and multiple coating layers located on the folding portion. The multiple coating layers may include a first coating layer including a first portion located on an edge area of the folding portion, and a second portion located on a central area of the folding portion, wherein the first portion and the second portion has different lengths extending in a first direction perpendicular to the folding axis, and the first coating layer has a first hardness, and a second coating layer which is at least partially in contact with the first coating layer and has a second hardness higher than the first hardness.

According to various embodiments, the length of the first coating layer extending in the first direction may be larger in the first area than in the second area.

According to various embodiments, the first portion may be coated in the first direction, and the second portion may be coated in a second direction perpendicular to the first direction.

According to various embodiments, the minimum length of the first coating layer extending in the first direction may be an actual bending section of the electronic device.

According to various embodiments, the second coating layer may be located between the first coating layer and the flat portion of the glass.

It may be apparent to a person ordinarily skilled in the technical field to which the disclosure belongs that the window glass 410 according to various embodiment described above and an electronic device 100 including the same are not limited by the above-described embodiments and drawings, and various substitutions, modifications, and changes can be made within the technical scope of the disclosure.

## Claims

1. A flexible cover window comprising:
a glass including a flat portion and a folding portion which extends from the flat portion and is thinner than the flat portion; and
multiple coating layers located on the folding portion,
wherein the multiple coating layers comprises:
a first coating layer including a first portion which is at least partially located on a first edge area of the folding portion, and a second portion which is at least partially located on a second edge area opposite to the first edge area of the folding portion, wherein each of the first portion and the second portion has a first hardness; and
a second coating layer which is at least partially in contact with the first portion and the second portion and has a second hardness higher than the first hardness.

2. The flexible cover window of claim 1, wherein the first portion and the second portion of the first coating layer are formed integrally.

3. The flexible cover window of claim 1, wherein the first portion of the first coating layer includes multiple areas with different lengths extending in a first direction perpendicular to a folding axis, and
wherein the multiple areas includes:
a first area at least partially located on the first edge area;
a second area located between the first edge area and the second edge area; and
a third area located between the first area and the second area.

4. The flexible cover window of claim 3, wherein the length of the first coating layer extending in the first direction is larger in the first area than in the second area.

5. The flexible cover window of claim 3, wherein the first area of the first coating layer is coated in the first direction, and the second area is coated in a second direction perpendicular to the first direction.

6. The flexible cover window of claim 1, wherein a minimum length of the first coating layer is the same as a length of a bending section when the electronic device is folded.

7. The flexible cover window of claim 1, wherein the second coating layer is located between the first coating layer and the flat portion.

8. The flexible cover window of claim 7, wherein a boundary line between the second coating layer and the first coating layer is at least partially curved.

9. The flexible cover window of claim 1, wherein the second coating layer is located between the first portion and the second portion.

10. The flexible cover window of claim 6, wherein multiple slips are formed on the glass which is in contact with the first coating layer and the second coating layer.

11. The flexible cover window of claim 10, wherein the multiple slips are formed on the flat portion of the glass.

12. The flexible cover window of claim 10, wherein the multiple slips are formed on at least a portion of the folding portion of the glass, and wherein the bending section is excluded from the multiple slips.

13. The flexible cover window of claim 10, wherein the multiple slips in contact with the first coating layer having the first hardness have a size larger than a size of the multiple slips in contact with the second coating layer having the second hardness.

14. The flexible cover window of claim 1, wherein the first coating layer further includes a third portion formed between the first portion and the second portion and having a third hardness higher than the first hardness and lower than the second hardness.

15. The flexible cover window of claim 1, wherein a length of the folding portion is larger than a length of the bending section.
